# FASCICULE DE BREVET EUROPEEN

(11) **EP 0 618 400 B1**
(45) Date de publication et mention de la délivrance du brevet: **09.10.1996**
(21) Numéro de dépôt: 94400662.6
(22) Date de dépôt: 28.03.1994
(51) Int. Cl.: F17C 1/06, F16J 12/00

(54) **Enceinte métallique pour fluide sous pression et procédé de renforcement d'une telle enceinte**
Metallgefäss für Druckfluide und Verfahren zur Verstärkung solch eines Gefässes
Metallic vessel for pressurised fluids and process for reinforcing such a vessel

(30) Priorité: 30.03.1993 FR 9303692
(43) Date de publication de la demande: 05.10.1994
(73) Titulaire: SOLLAC, F-92800 Puteaux (FR)
(72) Inventeur: Murru, Patrick, F-13500 Martigues (FR); Patou, Pascal, F-13760 Saint Cannat (FR)
(74) Mandataire: Lanceplaine, Jean-Claude

(56) Documents cités:
- EP-A- 0 497 687
- GB-A- 520 352
- GB-A- 671 609

## Description

La présente invention a pour objet une enceinte métallique pour fluide sous pression, comme par exemple un réservoir à gaz sous pression.

La présente invention a également pour objet un procédé de renforcement d'une telle enceinte.

Durant les prochaines années, le gaz naturel devrait être de plus en plus exploité en tant que substitut aux produits pétroliers dans les moteurs à explosion des véhicules automobiles.

Toutefois, en raison de sa faible densité énergétique, le gaz naturel doit être comprimé à haute pression ce qui conduit à l'utilisation de réservoirs très lourds.

En effet, la densité énergétique du gaz naturel comprimé à 200 bars est environ égale au quart de celle de l'essence.

Ainsi, pour conserver une autonomie d'environ de 750 Kilomètres, un véhicule automobile devrait être équipé d'un réservoir d'au moins 200 litres de gaz naturel comprimé à 200 bars.

Les fabricants de réservoirs à gaz sous pression sont donc obligés de minimiser leur masse compte tenu de la pression du gaz, du volume interne et de la place disponible dans le véhicule automobile.

Les réservoirs à gaz sous pression habituellement utilisés sont en acier et du type comprenant un corps de forme générale cylindrique fermé à ses deux extrémités opposées par deux fonds arrondis, dont l'un est muni d'une ouverture dans laquelle est installé un robinet pour le passage du gaz.

Pour satisfaire aux contraintes d'allégement, la paroi du corps cylindrique du réservoir est amincie par rapport à l'épaisseur de la paroi constituant les deux fonds.

Cependant, ce choix impose de renforcer mécaniquement le réservoir dans sa partie cylindrique.

En effet, la paroi cylindrique est principalement soumise à deux contraintes mécaniques, l'une dans la direction axiale, l'autre dans la direction circonférentielle. Cette dernière est deux fois plus élevée que la contrainte axiale. C'est pourquoi il est nécessaire de renforcer la paroi cylindrique dans la direction circonférentielle.

Jusqu'à présent les fabricants de réservoirs à gaz sous pression renforcent le corps cylindrique dudit réservoir en enroulant des fibres de verre, d'aramide ou de carbone autour dudit corps cylindrique et en noyant ces fibres dans une résine organique.

Malgré l'allégement et le renforcement mécanique procurés par cette technique, on a pu constater que celle ci induit des inconvénients majeurs.

En effet, lors de la réalisation de l'opération de renforcement du corps cylindrique de ce type de réservoirs, l'évacuation des solvants présents dans la résine organique pose un problème technique qui, s'il n'est pas résolu, entraîne de graves conséquences sur la santé des opérateurs et sur la pollution de l'environnement.

De plus, l'approvisionnement et la conservation dans un atelier de cette résine organique ne facilite pas l'emploi de cette solution technique.

Par ailleurs, l'opération d'enroulement des fibres de verre ou d'une autre nature ne peut se faire que très lentement en raison des temps élevés d'évaporation des solvants.

Il convient également de noter que les réservoirs à gaz sous pression allégés et renforcés mécaniquement doivent présenter une tenue à la fatigue satisfaisante, et doivent par exemple résister à environ 20 000 cycles de remplissage et de vidage, résister aux chocs mécaniques et offrir une résistance à la chaleur ainsi qu'une tenue à la corrosion sous contrainte.

Or, la technique de renforcement par fibres de verre enroulées autour de la partie cylindrique des réservoirs à gaz et noyées dans une résine organique, n'est pas adaptée aux conditions d'emploi agressives de ces réservoirs durant leur mise en service en raison même de la fragilité de ces fibres de verre.

Ainsi, les chocs mécaniques sur les réservoirs à gaz sous pression allégés et renforcés par cette technique et qui se produisent, par exemple, lors d'une manipulation avant leur installation sur un véhicule automobile ou à l'occasion d'un accident lors du déplacement dudit véhicule automobile, risquent bien souvent de briser les fibres de verre.

Par ailleurs, le problème de l'allégement et du renforcement mécanique d'une enceinte métallique destinée à contenir un fluide sous pression, telle qu'un réservoir à gaz, peut se poser dans de nombreux domaines comme par exemple celui du transfert de fluide sous pression dans les conduites ou celui des extincteurs d'incendie.

On connaît dans le brevet GB-A-520 352 une enceinte métallique destinée à contenir au moins un fluide sous pression comme par exemple un réservoir à gaz sous pression.

Cette enceinte comporte une ouverture et est munie, sur au moins une partie de sa surface extérieure, d'une enveloppe de renforcement comportant, d'une part, un revêtement formé d'au moins une couche caoutchouteuse et, d'autre part, une armature métallique noyée dans ledit revêtement. Cette armature métallique est formée d'un élément cylindrique métallique enroulé de manière jointive autour de la partie de la surface extérieure de l'enceinte métallique à partir d'une de ses extérmités.

On connaît également dans le brevet GB-A-671 609 un procédé de formage d'une enceinte métallique dans lequel on injecte un fluide sous pression pour déformer plastiquement la partie de la surface extérieure de ladite enceinte métallique.

Mais, lorsque l'enceinte métallique est revêtue d'une enveloppe de renforcement comportant un revêtement formé d'au moins une couche caoutchouteuse et une armature noyée dans ledit revêtement et que cette enceinte est déformée par injection d'un fluide sous pression, l'enveloppe de renforcement n'adhère pas correctement sur la paroi externe de l'enceinte métallique et ne remplit pas sa fonction de renforcement.

L'invention a pour but de pallier aux inconvénients mentionnés ci-dessus en proposant une enceinte métallique destinée à contenir un fluide sous pression et renforcée sur les zones les plus sollicitées mécaniquement par ledit fluide sous pression ou sur les zones des parois de ladite enceinte métallique dont on a volontairement réduit l'épaisseur, tout en permettant de ne pas alourdir notablement ladite enceinte métallique.

L'invention a donc pour objet une enceinte métallique destinée à contenir au moins un fluide sous pression, comme par exemple un réservoir à gaz sous pression, du type comportant une ouverture, ladite enceinte étant munie sur au moins une partie de sa surface extérieure d'une enveloppe de renforcement comportant, d'une part, un revêtement formé d'au moins une couche caoutchouteuse et, d'autre part, une armature métallique souple noyée dans ledit revêtement, l'armature métallique étant formée d'un élément cylindrique métallique enroulé de manière jointive autour de la partie de la surface extérieure de l'enceinte métallique à partir d'une des extrémité de ladite enceinte, caractérisée en ce que l'enceinte est munie d'au moins une couche de laiton interposée entre la partie de la surface extérieure de ladite enceinte métallique (1) et l'enveloppe de renforcement et l'élement cylindrique est laitonné.

Selon d'autres caractéristiques de l'invention:
- la couche de laiton a une épaisseur comprise entre 0,1 et 1µm,
- la couche caoutchouteuse a une épaisseur comprise entre 0,05 et 5mm et de préférence comprise entre 0,1 et 1mm,
- l'élément cylindrique métallique enroulé de manière jointive forme un nombre de nappes superposées, pair et supérieur ou égal à deux et comporte deux extrémités opposées reliées entre elles et solidarisées par brasage,
- l'élément cylindrique métallique est composé d'au moins un brin d'acier de diamètre compris entre 100 et 300 µm et de préférence compris entre 150 et 250 µm,
- l'élément cylindrique métallique constitue un tissu, une tresse, un toron de câbles ou un faisceau,
- l'élement cylindrique métallique est enrobé d'une gaine caoutchouteuse vulcanisable.

L'invention a également pour objet un procédé de renforcement mécanique d'une enceinte métallique destinée à contenir au moins un fluide sous pression, comme par exemple un réservoir à gaz sous pression, du type comportant une ouverture, dans laquelle :
- on recouvre au moins une partie de la surface extérieure de ladite enceinte métallique d'une enveloppe de renforcement comportant, d'une part, un revêtement formé d'au moins une couche caoutchouteuse et, d'autre part, une armature métallique noyée dans ledit revêtement et formée d'au moins un élément cylindrique métallique,
- on effectue la vulcanisation dudit revêtement,
- et on injecte par l'ouverture dans l'enceinte métallique vide un liquide incompressible sous pression pour déformer plastiquement la partie de la surface extérieure de ladite enceinte métallique,
caractérisé en ce que :
- on dispose, entre la partie (2c) de la surface extérieures (2) de ladite enceinte métallique (1) et l'enveloppe de renforcement (10), au moins une couche (6) de laiton,
- on enroule de manière jointive autour de la surface revêtue, à partir d'une des.,extrémités de ladite surface revêtue, l'élément cylindrique métallique afin de former un nombre de nappes superposées, pair et supérieur ou égal à deux, ledit élément cylindrique étant laitonné,
- on relie entre elles les extrémités de l'élément cylindrique métallique et on les solidarise par brasage,
- et on vulcanise l'enveloppe de renforcement par effet Joule et/ou induction électromagnétique en appliquant une tension électrique entre les extrémités de l'élément cylindrique.

Selon d'autres caractéristiques de l'invention :
- on forme l'armature métallique à partir d'un élément cylindrique composé d'au moins un brin d'acier,
- on forme l'armature métallique à partir d'au moins un élément cylindrique constituant un tissu, une tresse, un toron de câbles ou un faisceau,
- on enrobe l'élément cylindrique d'une gaine caoutchouteuse vulcanisable,
- préalablement au recouvrement de la partie de la surface extérieure de l'enceinte métallique par l'enveloppe, on effectue un décapage de ladite partie,
- préalablement au recouvrement de la partie de la surface extérieure de l'enceinte par l'enveloppe, on dépose électrolytiquement sur ladite partie au moins une couche de laiton,
- on enroule de manière jointive une bande caoutchouteuse autour de la nappe,
- on dépose la couche caoutchouteuse par aspersion, enduction ou par trempé,
- on dépose la couche caoutchouteuse par extrusion.

D'autres caractéristiques et avantages de l'invention apparaîtront au cours de la description qui va suivre, donnée uniquement à titre d'exemple et faite en référence aux dessins annexés, sur lesquels:
- la Fig. 1 est une vue schématique en perspective d'une enceinte métallique sous pression selon l'invention,
- la Fig. 2 est une vue schématique partielle agrandie du corps cylindrique de l'enceinte métallique sous pression selon la Fig.1.

L'invention s'applique au renforcement d'une enceinte métallique destinée à contenir un fluide sous pression, comme par exemple un réservoir en acier à gaz comprimé.

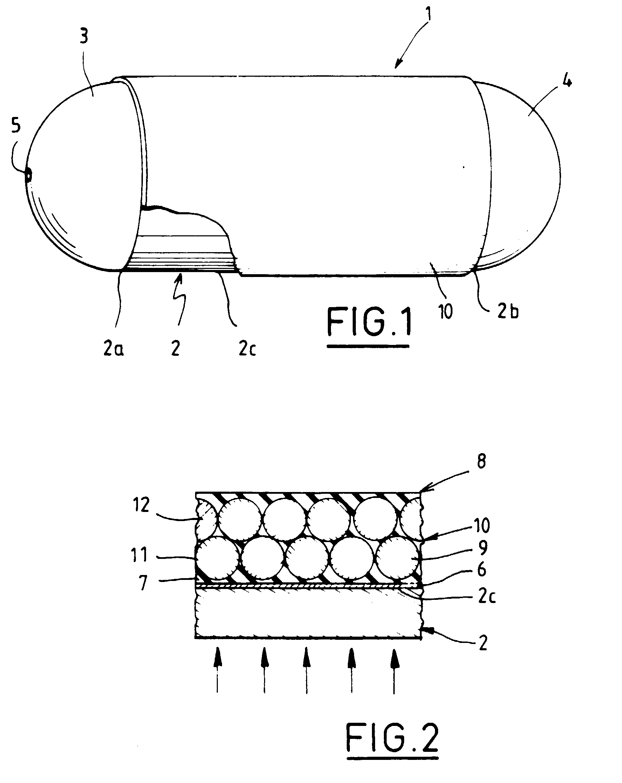

Un tel réservoir représenté à la Fig. 1 et désigné dans son ensemble par la référence 1 comprend un corps 2 de forme cylindrique fermé à ses deux extrémités opposées 2a et 2b par deux fonds, respectivement 3 et 4 ou deux calottes de formes générales convexes et par exemple hémisphériques.

Ces fonds 3 et 4 qui ne sont pas nécessairement identiques, peuvent également prendre une forme elliptique, voire une combinaison des deux formes ou toute autre forme appropriée.

Chaque fond 3 et 4 a une épaisseur moyenne identique et supérieure à celle du corps cylindrique 2 dont l'épaisseur a été volontairement réduite afin d'alléger le réservoir à gaz 1.

Une ouverture 5 a été pratiquée dans l'un des fonds, comme par exemple le fond 3, et dans laquelle est installé un robinet, non représenté, pour le vidage et le remplissage en gaz du réservoir 1.

Pour renforcer mécaniquement le réservoir à gaz 1, on procède tout d'abord à un traitement de la surface extérieure 2c du corps métallique 2 pour la nettoyer et par exemple on effectue un décapage de cette surface afin de la débarrasser de ses oxydes superficiels. Ensuite, on effectue un dépôt électrolytique dans un bain de cyanure d'au moins une couche 6 de laiton sur la surface extérieure 2c du corps cylindrique 2 afin de former un revêtement de laiton.

Cette couche 6 a notamment pour fonction de protéger le corps cylindrique 2 contre la corrosion.

L'épaisseur de cette couche 6 est comprise entre 0,1 et 1µm et par exemple égale à 0,2 µm.

Selon un premier mode de réalisation, on dépose au moins une couche caoutchouteuse 7 pouvant contenir du soufre sur la partie de la surface extérieure du réservoir 1 que l'on désire renforcer, c'est à dire sur la surface extérieure cylindrique 2c du corps 2 pour former un revêtement 8 destiné à être en contact avec la couche 6 de laiton.

Cette couche 7 peut être déposée par enroulement d'une bande étroite de caoutchouc de manière jointive autour de la surface extérieure cylindrique 2c afin de former un revêtement 8 homogène.

On peut également déposer la couche 7 à partir de caoutchouc liquide, par aspersion, enduction ou par trempé de la surface extérieure cylindrique 2c.

La couche 7 peut aussi être déposée par extrusion.

La couche caoutchouteuse 7 ainsi déposée a une épaisseur comprise entre 0,05 et 5mm, de préférence comprise entre 0,1 et 1mm et par exemple égale à 0,2mm.

Selon une variante, on dépose la couche caoutchouteuse 7 formant le revêtement 8 sur une surface d'un support de forme sensiblement identique à celle de la surface extérieure du réservoir 1, c'est à dire cylindrique.

Ce support, non représenté, servant de modèle pour le dépôt de la couche 7 a des dimensions inférieures au corps cylindrique 2 du réservoir 1 et a, par exemple un diamètre égal à 90% du diamètre dudit corps cylindrique 2.

Lorsque le revêtement 8 est déposé et que sa consistance permet de le manipuler, on retire ledit revêtement 8 du support, au moyen par exemple d'un écarteur comportant des doigts d'écartement, et l'on ajuste ce revêtement 8 sur la surface extérieure cylindrique 2c du réservoir 1.

Un tel revêtement 8 offre de multiples avantages, et notamment accepte les mouvements rotatifs du réservoir 1 sur lequel il est déposé, possède des caractéristiques mécaniques stables dans le temps et pendant la durée de vie dudit réservoir.

De plus, il présente l'avantage d'être inaltérable aux diverses agressions extérieures par exemple chimiques et mécaniques et en particulier de créer une barrière protégeant le réservoir 1 contre la corrosion.

Après avoir recouvert la surface extérieure cylindrique 2c du réservoir 1 du revêtement 8, on enroule de manière jointive à partir d'une 2a des extrémités 2a ou 2b du corps cylindrique 2 revêtu et autour de celui-ci, un élément sensiblement cylindrique 9 pouvant être laitonné.

Le revêtement 8 constitué par la couche caoutchouteuse 7 et l'élément cylindrique 9 forment une enveloppe de renforcement désignée dans son ensemble par la référence 10.

L'élément cylindrique 9 est formé, dans un exemple d'application d'au moins un toron métallique qui est, lui même constitué de plusieurs brins métalliques tordus ensemble.

Chaque brin a un diamètre compris entre 100 et 300 µm et de préférence compris entre 150 et 250 µm et possède une résistance à la traction très élevée, comprise entre 2 et 5 GPa et de préférence égale à 3,5 GPa.

L'élément cylindrique 9 est par exemple formé de plusieurs torons métalliques tordus ensemble ou tressés formant alors un câble.

Selon le type de réservoirs, leurs utilisations et les conditions spécifiques à ces utilisations, on peut employer un seul toron ou plusieurs torons avec un nombre et un diamètre de brins variés.

Avantageusement, les brins métalliques sont en acier afin de procurer un résistance mécanique et une rigidité suffisantes permettant de renforcer le réservoir à gaz sous pression.

Le toron est obtenu en torsadant un certain nombre de brins d'acier. Ainsi le toron a une tenue mécanique et la torsion des brins empêche leur dissociation.

Cependant cette configuration peut apporter une élasticité au toron. Par exemple, le module de YOUNG d'un toron de 27 brins est de 175 GPa alors que le brin en lui-même a un module de 200 GPa.

De préférence, l'élément cylindrique 9 est formé d'un faisceau de brins métalliques, c'est à dire non torsadés.

Sous cette forme, il est possible de choisir un nombre de brins constituant le faisceau, alors que dans le cas d'un toron, il existe une limite attachée à la constitution du toron dont le nombre de brins doit répondre à une loi numérique particulière, du type 3i²/4 ou 1 + 3(i²-1)/4 selon que l'âme du toron comporte 3 brins ou 1 brin.

L'élément cylindrique 9 est enroulé par exemple à partir de l'extrémité 2a du corps cylindrique 2 de manière à former une première nappe 11 sur le corps cylindrique 2c revêtu du réservoir 1.

L'élément cylindrique 9 peut également être enroulé à partir de l'extrémité opposée 2b du corps cylindrique 2 revêtu, au-dessus de la première nappe 11, de façon à former une seconde nappe 12 superposée à la première nappe 11.

En formant de cette manière un nombre de nappes 11 et 12 égal à deux et plus généralement un nombre pair et supérieur ou égal à deux, on amène en face l'une de l'autre les extrémités, non représentées, de l'élément cylindrique 9, on les relie et on les solidarise par exemple par brasage à l'étain.

Il est également possible de déposer sur au moins une des nappes 11 et 12 au moins une couche caoutchouteuse pouvant contenir du soufre de même épaisseur, voire d'épaisseur inférieure à celle de la couche 7 du revêtement 8 précédemment cité selon l'utilisation souhaitée du réservoir 1.

On peut par exemple interposer une couche caoutchouteuse entre les deux nappes 11 et 12.

D'une manière générale, les nappes 11 et 12 ainsi formées, sont noyées dans le revêtement 8 et constituent une armature métallique souple.

Selon une variante, on assemble plusieurs éléments cylindriques 9 de manière à former un tissu métallique que l'on enroule ensuite autour du corps cylindrique 2 revêtu et l'on solidarise, par exemple par brasage, les bords dudit tissu amenés en regard l'un de l'autre.

On peut également réaliser un tissu métallique en forme de manchon que l'on enfile autour du corps cylindrique 2 revêtu et qui constitue l'armature métallique souple.

Selon une autre variante, on fabrique une tresse métallique à partir des éléments cylindriques 9 et on enroule cette tresse métallique de manière jointive autour du corps cylindrique 2 revêtu, à partir d'une de ses extrémités 2a ou 2b afin de constituer l'armature métallique souple.

L'élément cylindrique 9 peut être enrobé d'une gaine constituée d'un caoutchouc vulcanisable comme par exemple une ébonite à base de caoutchouc naturel ou de styrène-butadiène. L'ébonite est préalablement liquéfiée par dissolution dans un solvant, afin de faciliter l'enrobage en continu de l'élément cylindrique 9.

La gaine assure une isolation électrique entre les spires formées par l'élément cylindrique 9.

La vulcanisation peut être réalisée par effet Joule et/ou induction électromagnétique en appliquant une tension électrique entre les extrémités de l'élément cylindrique 9 ce qui permet un contrôle de la vulcanisation en fonction de l'épaisseur de l'armature et de l'enveloppe de renforcement.

La vulcanisation peut être réalisée par d'autres procédés de chauffage comme par exemple le passage en étuve ou l'exposition aux infra-rouges.

On peut également réaliser une vulcanisation préalable des couches caoutchouteuses proche de la surface extérieure 2 de l'enceinte 1 et une vulcanisation progressive de cette surface vers la surface de l'enveloppe de renforcement.

L'élément cylindrique 9 peut constituer un tissu, une tresse, un toron de câbles ou un faisceau.

Dans les différentes variantes de l'invention précédemment décrites, l'armature métallique souple est noyée dans le revêtement 8.

Ainsi, la surface extérieure cylindrique 2c du réservoir à gaz sous pression 1 revêtue de la couche 6 de laiton est recouverte d'une enveloppe de renforcement 10 comportant, d'une part, un revêtement 8 formé d'une couche caoutchouteuse 7 pouvant contenir du soufre qui est en contact avec ladite couche 6 de laiton et, d'autre part, une armature métallique constituée de deux nappes 11 et 12 d'élément cylindrique laitonné 9 superposées et noyées dans ledit revêtement 8.

L'épaisseur du revêtement 8 doit être suffisamment faible pour ne pas perturber le fonctionnement de l'enveloppe de renforcement 10.

En effet, si le caoutchouc absorbe trop la déformation radiale du corps cylindrique 2, l'élément cylindrique 9 sera peu sollicité en fonctionnement normal et le réservoir 1 risque de se détériorer au cours du temps par un effet de rupture par fatigue.

Ensuite, on effectue une vulcanisation du revêtement 8 c'est à dire de la couche caoutchouteuse 7 à une température comprise entre 100 et 160°C, de préférence comprise entre 120 et 150°C et par exemple égale à 120°C, sous une pression adaptée par exemple environ 20 bars et pendant une durée comprise entre 20 et 30 minutes et par exemple égale à 20 minutes.

L'opération de vulcanisation provoque une oxydation du laiton contenu dans la couche 6, et il se produit une réaction chimique d'oxydation entre le cuivre du laiton et le soufre contenu dans la couche caoutchouteuse 7 qui augmente fortement l'adhérence, d'une part, entre l'élément cylindrique laitonné 9 et le caoutchouc et, d'autre part, entre le réservoir 1 et ledit caoutchouc.

Par ailleurs, le revêtement 8 formé par la couche caoutchouteuse 7 participe au maintien de l'élément cylindrique 9 sur le réservoir 1.

Simultanément à l'opération de vulcanisation du revêtement 8, on injecte dans le réservoir 1, par l'ouverture 5 un liquide incompressible, comme par exemple de l'eau sous une pression comprise entre 350 et 450 bars et par exemple égale à 400 bars.

Selon une variante, l'injection du liquide incompressible sous pression dans le réservoir 1 peut être effectuée consécutivement à l'opération de vulcanisation.

Selon une autre variante, l'injection du liquide incompressible sous pression dans le réservoir 1 peut être effectuée avant l'opération de vulcanisation.

Cette injection de liquide incompressible sous pression a pour but d'induire des précontraintes de compression dans le réservoir 1 en dépassant la limite d'élasticité du matériau métallique constituant ledit réservoir et d'induire des précontraintes de traction dans l'élément cylindrique 9 en restant dans le domaine élastique de l'acier formant ledit élément.

Cette technique provoque l'écrouissage du réservoir 1 ce qui lui offre une plus grande latitude de déformation lorsqu'il est rempli de gaz sous une pression de 200 bars, étant donné que sa limite élastique est plus élevée.

Avantageusement, la tenue en fatigue du réservoir 1 est améliorée et sa durée de vie est donc allongée.

Le procédé de renforcement selon l'invention a été appliqué à un réservoir à gaz sous pression d'une capacité de 80 litres et ayant une longueur totale de lm, un diamètre de corps cylindrique 2 de 36cm, une épaisseur de paroi dudit corps cylindrique 2 de 4,5mm, une épaisseur moyenne de chacun des fonds 3 et 4 respectivement égale à 8 et 12mm, un poids à vide de 48 kg et le matériau métallique constituant ledit réservoir étant un acier 35CD4.

L'acier formant l'élément cylindrique 9 est un acier par exemple à 0,8% de carbone et a une résistance mécanique de 3500Mpa, ledit élément 9 étant constitué de brins en faisceau ou en toron ayant chacun 27 brins, chaque brin ayant un diamètre de 175 µm.

Le caoutchouc synthétique contenant du soufre et constituant le revêtement 8 est un produit comme par exemple un caoutchouc liquide connu sous la marque "RUPSON".

Selon un autre mode de réalisation de l'invention, après avoir revêtu la surface extérieure 2c du corps cylindrique 2 de la couche 6 de laiton, on dépose une couche caoutchouteuse 7 sur une surface d'un support cylindrique pour former un revêtement 8.

Ce support, non représenté, sert de modèle pour le dépôt de la couche 7 et pour les opérations ultérieures et son diamètre est par exemple égal à 90% de celui du corps cylindrique.

Pour effectuer le dépôt de la couche 7, on peut enrouler une bande étroite de caoutchouc de manière jointive autour de la surface cylindrique du support afin de former un manchon.

Le dépôt de la couche 7 peut également être effectué à partir de caoutchouc liquide par aspersion, enduction ou par trempé de la surface cylindrique du support.

Le dépôt de la couche 7 peut également être effectué par extrusion.

Ensuite, on enroule de manière jointive à partir d'une des extrémités du support cylindrique revêtu de la couche 7 et autour de celui-ci, un élément cylindrique 9 formé d'au moins un toron métallique qui est lui même constitué de plusieurs brins métalliques tordus ensemble.

L'élément cylindrique 9 peut être un câble qui est formé de plusieurs torons métalliques tordus ensemble ou tressés.

Préférentiellement, les brins métalliques sont en acier.

L'élément cylindrique 9 est enroulé sur le support cylindrique de manière à former une première nappe 11 sur le support cylindrique revêtu, et à partir de l'extrémité opposée dudit support cylindrique revêtu, on enroule à nouveau ledit élément cylindrique 9 sur la première nappe 11 afin de former une deuxième nappe 12 superposée à ladite première nappe 11.

On forme de cette manière un nombre de nappes égal à deux et plus généralement pair et supérieur ou égal à deux pour amener en vis à vis les deux extrémités opposées de l'élément cylindrique laitonné 9, de façon à les relier et à les solidariser par exemple par brasage à l'étain.

Eventuellement, on peut déposer sur au moins une des nappes 11 ou 12, de l'élément cylindrique 9 au moins une couche caoutchouteuse comme par exemple une couche caoutchouteuse synthétique contenant du soufre de même épaisseur, voire d'épaisseur inférieure à celle de la couche 7 du revêtement 8.

Les nappes 11 et 12 ainsi formées constituent l'armature souple en acier qui est noyée dans le revêtement 8.

Selon une variante, on assemble plusieurs éléments cylindriques 9 de manière à former un tissu en acier que l'on enroule ensuite autour du support cylindrique revêtu et l'on solidarise par exemple par brasage, les bords dudit tissu amenés en regard l'un de l'autre.

On peut également réaliser un tissu en acier en forme de manchon que l'on enfile autour du support cylindrique revêtu pour constituer l'armature souple en acier.

Selon une autre variante, on fabrique une tresse en acier à partir de plusieurs éléments cylindriques 9 et on enroule cette tresse de manière jointive autour du support cylindrique revêtu, à partir d'une de ses extrémités afin de constituer l'armature souple en acier.

On réalise ainsi sur le support cylindrique, une enveloppe de renforcement 10 comportant, d'une part, un revêtement 8 formé d'une couche 7 caoutchouteuse et, d'autre part, une armature souple en acier constituée de deux nappes 11 et 12 d'élément cylindrique 9 superposées et noyées dans ledit revêtement 8.

Il est alors possible de retirer l'enveloppe de renforcement 10 ainsi formée du support cylindrique, au moyen par exemple d'un écarteur comportant des doigts d'écartement, et d'ajuster ladite enveloppe de renforcement 10 sur la surface extérieure cylindrique 2c du réservoir 1.

On effectue alors dans les mêmes conditions que celles décrites pour le premier mode de réalisation, les opérations de vulcanisation et d'injection d'un liquide incompressible sous pression dans le réservoir 1 afin d'obtenir un réservoir sous pression renforcé mécaniquement.

Le procédé selon l'invention s'applique aussi bien aux réservoirs à gaz sous pression qu'aux réservoirs hydrauliques ou d'un autre type, qu'ils soient fabriqués avec ou sans soudure.

Plus généralement, on peut utiliser ce procédé de renforcement sur des enceintes métalliques destinées à contenir au moins un fluide sous pression et dont on a par exemple, allégé certaines parties pour leur transport.

Ce procédé peut donc s'appliquer de manière non limitative aux conduites de gaz, aux extincteurs d'incendie, aux bouteilles de gaz industriel ou aux bouteilles d'air comprimé.

Lorsque le problème d'allégement de l'enceinte métallique ne se pose pas, mais quand il est malgré tout nécessaire de renforcer mécaniquement au moins une partie de la surface extérieure de cette enceinte, le procédé selon l'invention est très avantageux.

En effet, la fabrication d'une enceinte métallique renforcée est simple et n'utilise pas d'éléments toxiques nuisibles.

Les enceintes métalliques ainsi renforcées offrent une très bonne tenue aux chocs mécaniques ainsi qu'en fatigue et leur recyclage ne pose pas les problèmes occasionnés par l'emploi de fibres de verre ou d'aramide ou de résines organiques.

En outre, le revêtement en caoutchouc de l'enveloppe de renforcement peut retenir en cas d'explosion les éventuels éclats de l'élément cylindrique laitonné et éviter ainsi tout phénomène de fragmentation.

De plus, la fabrication d'une enceinte métallique renforcée selon le procédé de l'invention est économique.

## Revendications

1. Enceinte métallique destinée à contenir au moins un fluide sous pression, comme par exemple un réservoir à gaz sous pression, du type comportant une ouverture (5), ladite enceinte (1) étant munie, sur au moins une partie (2c) de sa surface extérieure (2), d'une enveloppe de renforcement (10) comportant, d'une part, un revêtement (8) formé d'au moins une couche caoutchouteuse (7) et, d'autre part, une armature métallique (11, 12) noyée dans ledit revêtement (8),
l'armature métallique étant formée d'un élément cylindrique métallique (9) enroulé de manière jointive autour de la partie (2c) de la surface extérieure (2) de l'enceinte métallique (1) à partir d'une des extrémités (2a, 2b) de ladite partie (2c), caractérisée en ce que ladite enceinte (1) est munie d'au moins une couche (6) de laiton interposée entre la partie (2c) de la surface extérieure (2) de ladite enceinte métallique (1) et l'enveloppe de renforcement (10) et l'élément cylindrique (8) est laitonné.

2. Enceinte selon la revendication 1,
caractérisée en ce que la couche (6) de laiton a une épaisseur comprise entre 0,1 et 1µm.

3. Enceinte selon la revendication 1,
caractérisée en ce que la couche caoutchouteuse (7) a une épaisseur comprise entre 0,05 et 5mm et de préférence comprise entre 0,1 et 1mm.

4. Enceinte selon la revendication 1,
caractérisée en ce que l'élément cylindrique métallique (9) enroulé de manière jointive forme un nombre de nappes (11, 12) superposées, pair et supérieur ou égal à deux et comporte deux extrémités opposées reliées entre elles et solidarisées par brasage.

5. Enceinte selon les revendications 1 et 4,
caractérisée en ce que l'élément cylindrique métallique (9) est composé d'au moins un brin d'acier de diamètre compris entre 100 et 300µm et de préférence compris entre 150 et 250µm.

6. Enceinte selon les revendications 1, 4, et 5, caractérisée en ce que l'élément cylindrique métallique (9) constitue un tissu, une tresse, un toron de câbles ou un faisceau.

7. Enceinte selon l'une quelconque des revendications 1 et 4 à 6, caractérisée en ce que l'élément cylindrique métallique (9) est enrobé d'une gaine caoutchouteuse vulcanisable.

8. Procédé de renforcement mécanique d'une enceinte métallique (1) destinée à contenir au moins un fluide sous pression, comme par exemple un réservoir à gaz sous pression, du type comportant une ouverture (5), dans lequel :
- on recouvre, au moins une partie (2c) de la surface extérieure (2) de ladite enceinte métallique (1), d'une enveloppe de renforcement (10) comportant, d'une part, un revêtement (8) formé d'au moins une couche caoutchouteuse (7) et, d'autre part, une armature métallique (11, 12) noyée dans ledit revêtement (8) et formée d'au moins un élément cylindrique métallique (9),
- on effectue la vulcanisation dudit revêtement (8),
- et on injecte par l'ouverture (5) dans l'enceinte métallique (1) vide un liquide incompressible sous pression pour déformer plastiquement la partie (2c) de la surface extérieure (2) de ladite enceinte métallique (1),
caractérisé en ce que ;
- on dispose, entre la partie (2c) de la surface extérieure (2) de ladite enceinte métallique (1) et l'enveloppe de renforcement (10), au moins une couche (6) de laiton,
- on enroule de manière jointive autour de la surface revêtue, à partir d'une des extrémités de ladite surface revêtue, l'élément cylindrique métallique (9) afin de former un nombre de nappes (11, 12) superposées, pair et supérieur ou égal à deux, ledit élément cylindrique (9) étant laitonné,
- on relie entre elles les extrémités de l'élément cylindrique métallique (9) et on les solidarise par brasage
- et on vulcanise l'enveloppe de renforcement (10) par effet Joule et/ou induction électromagnétique en appliquant une tension électrique entre les extrémités de l'élément cylindrique (9).

9. Procédé selon la revendication 8,
caractérisé en ce que l'on forme l'armature métallique (11, 12) à partir d'un élément cylindrique (9) composé d'au moins un brin d'acier.

10. Procédé selon la revendication 8,
caractérisé en ce que l'on forme l'armature métallique (11, 12) à partir d'au moins un élément cylindrique (9) constituant un tissu, une tresse, un toron de câbles ou un faisceau.

11. Procédé selon l'une quelconque des revendications 8 à 10, caractérisé en ce que l'on enrobe l'élément cylindrique (9) d'une gaine caoutchouteuse vulcanisable.

12. Procédé selon l'une des revendications à 11, caractérisé en ce que, préalablement au recouvrement de la partie (2c) de la surface extérieure (2) de l'enceinte métallique (1) par l'enveloppe (10), on effectue un décapage de ladite partie (2c).

13. Procédé selon l'une des revendications 8 à 11, caractérisé en ce que, préalablement au recouvrement de la partie (2c) de la surface intérieure (2) de l'enceinte (1) par l'enveloppe (10), on dépose électrolytiquement sur ladite partie (2c) au moins une couche (6) de laiton.

14. Procédé selon la revendication 8,
caractérisé en ce que l'on enroule de manière jointive une bande caoutchouteuse autour de la nappe (11, 12).

15. Procédé selon la revendication 8,
caractérisé en ce que l'on dépose la couche caoutchouteuse (7) par aspersion, enduction ou par trempé.

16. Procédé selon la revendication 8,
caractérisé en ce que l'on dépose la couche caoutchouteuse (7) par extrusion.

## Patentansprüche

1. Metallgefäß, das dazu bestimmt ist, zumindest ein Druckfluid zu enthalten, wie beispielsweise ein Druckgasbehälter, vom Typ mit einer Öffnung (5), wobei dieser Behälter (1) auf zumindest einem Teil (2c) seiner Außenfläche (2) mit einer Verstärkungshülle (10) versehen ist, einerseits bestehend aus einer Verkleidung (8), die von zumindest einer Gummischicht (7) gebildet wird, und andererseits aus einem Metallbeschlag (11, 12), der in diese Verkleidung eingearbeitet (8) ist, wobei der Metallbeschlag von einem zylindrischen metallischen Element (9) gebildet wird, das auf anliegende Art und Weise um den Teil (2c) der Außenfläche (2) des Metallgefäßes (1) von einem der Enden (2a, 2b) dieses Teils (2c) aus gewickelt ist, dadurch gekennzeichnet, daß das Gefäß (1) mit zumindest einer Messingschicht (6) versehen ist, die zwischen dem Teil (2c) der Außenfläche (2) des Metallgefäßes (1) und der Verstärkungshülle (10) angeordnet ist, und daß das zylindrische Element (9) vermessingt ist.

2. Gefäß nach Anspruch 1, dadurch gekennzeichnet, daß die Messingschicht (6) eine Dicke zwischen 0,1 und 1 µm aufweist.

3. Gefäß nach Anspruch 1, dadurch gekennzeichnet, daß die Gummischicht (7) eine Dicke zwischen 0,05 und 5 mm und vorzugsweise zwischen 0,1 und 1 mm aufweist.

4. Gefäß nach Anspruch 1, dadurch gekennzeichnet, daß das zylindrische metallische Element (9), das auf anliegende Art und Weise aufgewickelt ist, eine Anzahl von übereinanderliegenden Schichten (11, 12) in gerader Zahl oder in einer Zahl größer oder gleich zwei bildet und zwei gegenüberliegende Enden umfaßt, die miteinander verbunden und durch Löten aneinander befestigt sind.

5. Gefäß nach den Ansprüchen 1 und 4, dadurch gekennzeichnet, daß das zylindrische metallische Element (9) aus zumindest einem Stahltrumm besteht, dessen Durchmesser zwischen 100 und 300 µm und vorzugsweise zwischen 150 und 250 µm liegt.

6. Gefäß nach den Ansprüchen 1, 4 und 5, dadurch gekennzeichnet, daß das zylindrische metallische Element (9) ein Gewebe, ein Geflecht, eine Kabellitze oder ein Bündel darstellt.

7. Gefäß nach einem der Ansprüche 1 und 4 bis 6, dadurch gekennzeichnet, daß das zylindrische metallische Element (9) mit einem vulkanisierbaren Gummimantel umgeben ist,

8. Verfahren zur mechanischen Verstärkung eines Metallgefäßes (1), das dazu bestimmt ist, zumindest ein Druckfluid zu enthalten, wie beispielsweise ein Druckgasbehälter, vom Typ mit einer Öffnung (5), bei dem:
- zumindest ein Teil (2c) der Außenfläche (2) des Metallgefäßes (1) mit einer Verstärkungshülle (10) verkleidet ist, bestehend einerseits aus einer Verkleidung (8), die von zumindest einer Gummischicht (7) gebildet wird, und andererseits einem Metallbeschlag (11, 12), der in diese Verkleidung (8) eingearbeitet ist und von zumindest einem zylindrischen metallischen Element (9) gebildet wird;
- die Verkleidung (8) vulkanisiert wird;
- durch die Öffnung (5) in das leere Metallgefäß (1) eine nicht zusammendrückbare Druckflüssigkeit eingespritzt wird, um den Teil (2c) der Außenfläche (2) des Metallgefäßes (1) plastisch zu verformen;
dadurch gekennzeichnet, daß:
- zwischen dem Teil (2c) der Außenfläche (2) des Metallgefäßes (1) und der Verstärkungshülle (10) zumindest eine Messingschicht (6) angeordnet wird;
- auf anliegende Art und Weise um die verkleidete Fläche ausgehend von einem der Enden der verkleideten Fläche das zylindrische metallische Element (9) gewickelt wird, um eine Anzahl von übereinanderliegenden Schichten (11, 12) in gerader Zahl oder in einer Zahl größer oder gleich zwei zu bilden, wobei das zylindrische Element (9) vermessingt ist;
- die Enden des zylindrischen metallischen Elements (9) untereinander verbunden und durch Löten aneinander befestigt werden;
- und die Verstärkungshülle (10) durch Stromwärme und/oder elektromagnetische Induktion vulkanisiert wird, indem eine elektrische Spannung zwischen den Enden des zylindrischen Elements (9) angelegt wird.

9. Verfahren nach Anspruch 8, dadurch gekennzeichnet, daß der Metallbeschlag (11, 12) von einem zylindrischen Element (9) gebildet wird, das zumindest ein Stahltrumm umfaßt.

10. Verfahren nach Anspruch 8, dadurch gekennzeichnet, daß der Metallbeschlag (11, 12) von zumindest einem zylindrischen Element (9) gebildet wird, das ein Gewebe, ein Geflecht, eine Kabellitze oder ein Bündel darstellt.

11. Verfahren nach einem der Ansprüche 8 bis 10, dadurch gekennzeichnet, daß das zylindrische Element (9) mit einem vulkanisierbaren Gummimantel umgeben wird.

12. Verfahren nach einem der Ansprüche 8 bis 11, dadurch gekennzeichnet, daß vor der Verkleidung des Teils (2c) der Außenfläche (2) des Metallgefäßes (1) mit der Hülle (10) dieser Teil (2c) gebeizt wird.

13. Verfahren nach einem der Ansprüche 8 bis 11, dadurch gekennzeichnet, daß vor der Verkleidung des Teils (2c) der Außenfläche (2) des Gefäßes (1) mit der Hülle (10) auf diesen Teil (2c) zumindest eine Messingschicht (6) elektrolytisch aufgebracht wird.

14. Verfahren nach Anspruch 8, dadurch gekennzeichnet, daß ein Gummiband auf anliegende Art und Weise um die Schicht (11, 12) gewickelt wird.

15. Verfahren nach Anspruch 8, dadurch gekennzeichnet, daß die Gummischicht (7) durch Besprengung, Beschichtung oder Tauchlötung aufgebracht wird.

16. Verfahren nach Anspruch 8, dadurch gekennzeichnet, daß die Gummischicht (7) durch Extrusion aufgebracht wird.

## Claims

1. Metallic vessel intended to contain at least one pressurized fluid, such as, for example, a pressurized-gas container, of the type including an opening (5), the said vessel (1) being provided, on at least a part (2c) of its external surface (2), with a reinforcing jacket (10) which includes, on the one hand, a covering (8) formed by at least one rubber layer (7) and, on the other hand, a metallic reinforcement (11, 12) embedded in the said covering (8), the metallic reinforcemont being formed by a metallic cylindrical element (9) wound in a contiguous manner around the part (2c) of the external surface (2) of the metallic vessel (1) starting from one of the ends (2a, 2b) of the said part (2c), characterized in that the said vessel (1) is provided with at least one brass layer (6), interposed between the part (2c) of the external surface (2) of the said metallic vessel (1) and the reinforcing jacket (10), and the cylindrical element (9) is brass-plated.

2. Vessel according to Claim 1, characterized in that the brass layer (6) has a thickness of between 0.1 and 1 µm.

3. Vessel according to Claim 1, characterized in that the rubber layer (7) has a thickness of between 0.05 and 5 mm and preferably between 0.1 and 1 mm.

4. Vessel according to Claim 1, characterized in that the contiguously wound metallic cylindrical element (9) forms an even number, greater than or equal to two, of superposed plies (11, 12) and includes two opposite ends connected together and fastened by brazing.

5. Vessel according to Claims 1 and 4, characterized in that the metallic cylindrical element (9) is composed of at least one steel wire of diameter between 100 and 300 µm and preferably between 150 and 250 µm.

6. Vessel according to Claims 1, 4 and 5, characterized in that the metallic cylindrical element (9) constitutes a woven fabric, a braid, a cable strand or a wire bundle.

7. Vessel according to any one of Claims 1 and 4 to 6, characterized in that the metallic cylindrical element (9) is coated with a vulcanizable rubber sheath.

8. Process for the mechanical reinforcement of a metallic vessel (1) intended to contain at least one pressurized fluid, such as, for example, a pressurized-gas container, of the type including an opening (5), in which process:
- at least a part (2c) of the external surface (2) of the said metallic vessel (1) is covered with a reinforcing jacket (10) which includes, on the one hand, a covering (8) formed by at least one rubber layer (7) and, on the other hand, a metallic reinforcement (11, 12) embedded in the said covering (8) and formed by at least one metallic cylindrical element (9);
- the said covering (8) is vulcanized;
- and a pressurized incompressible liquid ins injected via the opening (5) into the empty metallic vessel (1) in order to plastically deform the part (2c) of the external surface (2) of the said metallic vessel (1),
characterized in that:
- at least one brass layer (6) is arranged between the part (2c) of the external surface (2) of the said metallic vessel (1) and the reinforcing jacket (10);
- the metallic cylindrical element (9) is wound contiguously around the coated surface, starting from one of the ends of the said coated surface, so as to form an even number, greater than or equal to two, of superposed plies (11, 12), the said cylindrical element (9) being brass-plated;
- the ends of the metallic cylindrical element (9) are connected together and fastened by brazing; and
- the reinforcing jacket (10) is vulcanized using the Joule effect and/or electromagnetic induction by applying an electrical voltage between the ends of the cylindrical element (9).

9. Process according to Claim 8, characterized in that the metallic reinforcement (11, 12) is formed from a cylindrical element (9) composed of at least one steel wire.

10. Process according to Claim 8, characterized in that the metallic reinforcement (11, 12) is formed from at least one cylindrical element (9) making up a woven fabric, a braid, a cable strand or a wire bundle.

11. Process according to any one of Claims 8 to l0, characterized in that the cylindrical element (9) is coated with a vulcanizable rubber sheath.

12. Process according to one of Claims to 11, characterized in that, prior to covering the part (2c) of the external surface (2) of the metallic vessel (1) with the jacket (10), the said part (2a) is descaled.

13. Process according to one of Claims 8 to 11, characterized in that, prior to covering the part (2c) of the external surface (2) of the vessel (1) with the jacket (10), at least one brass layer (6) is electrolytically deposited on the said part (2c).

14. Process according to Claim 8, characterized in that a rubber tape is wound contiguously around the ply (11, 12).

15. Process according to Claim 8, characterized in that the rubber layer (7) is deposited by spraying, coating or by dipping.

16. Process according to Claim 8, characterized in that the rubber layer (7) is deposited by extrusion.
